# EUROPEAN PATENT SPECIFICATION

(11) **EP 1 339 651 B1**
(45) Date of publication and mention of the grant of the patent: **19.01.2005**
(21) Application number: 01998514.2
(22) Date of filing: 29.11.2001
(51) Int. Cl.: C04B 26/00, C04B 14/10, A01G 9/02

(54) **METHOD FOR MANUFACTURING CONTAINERS FOR GROWING PLANTS AND CONTAINER PRODUCED WITH SUCH METHOD**
VERFAHREN ZUR HERSTELLUNG VON BEHÄLTERN FÜR PFLANZEN UND NACH DIESEM VERFAHREN HERGESTELLTE BEHÄLTER
PROCEDE DE FABRICATION DE CONTENEURS POUR CULTIVER DES PLANTES ET CONTENEUR PRODUIT SELON LEDIT PROCEDE

(30) Priority: 01.12.2000 IT VI20000266
(43) Date of publication of application: 03.09.2003
(73) Proprietor: Deroma S.p.A., 36034 Malo (Vicenza) (IT)
(72) Inventor: MASELLO, Giovanni, Franco, I-36030 San Vito Di Leguzzano (IT)
(86) International application number: PCT/EP2001/013931
(87) International publication number: WO 2002/044099

(56) References cited:
- EP-A- 0 989 104
- WO-A-93/17851
- DE-A- 19 710 895
- DE-U- 20 006 859
- GB-A- 2 291 419
- NL-C- 42 387
- US-A- 5 035 189
- DATABASE WPI Week 198303 Derwent Publications Ltd., London, GB; AN 1983-05718k XP002170320 & JP 57 196760 A (IWAMOTO Y)
- DATABASE WPI Week 198650 Derwent Publications Ltd., London, GB; AN 1986-328832 XP002170321 & JP 61 244736 A (CALP KOGYO KK)
- CHEMICAL ABSTRACTS, vol. 118, no. 2, 11 January 1993 (1993-01-11) Columbus, Ohio, US; abstract no. 10803h, S. HOSHI, ET AL.: page 246; XP000374571 & JP 04 227095 A (S. HOSHI, ET AL.) 17 August 1992 (1992-08-17)

## Description

The present invention relates to a method for manufacturing containers for growing plants and to a container produced with such method, particularly but not exclusively useful in the field of the mantifacture of vases of any shape for growing ornamental plants but also fruit-bearing plants.

The prior art is constituted by frustum-shaped and tray-like vases made of earthenware or plastics. The former are manufactured according to traditional methods which are widely known and used in the field of clay product. manufacturing. The latter are generally manufactured by means of processes for the injection-molding of plastics. Earthenware vases have many advantageous features, such as:
- porosity, which allows natural transpiration, through the structure of the vase, of the vegetative system of the plant and also prevents the stagnation of water in the soil in which the plant is bedded;
- surface shades of color and defects which make each vase unique.

With respect to conventional vases, plastic ones distinguish themselves for the following features:
- better elastic properties and considerable resistance to impacts;
- effective resistance to frost;
- absence of efflorescences on the external surface;
- a larger number of replantings can be performed using the same vase.

The main drawback of this state of the art is that earthenware vases lack the advantageous features of plastic vases and vice versa.

WO 93/17851 refers to a process for producing a composite material, in which a particulate carrier material is coated with uncured, possibly molten, thermosetting coating powder, and the coated particles of the carrier material are heated in a mould to a temperature at which the powder coating coats of the individual particles melt and fuse together forming a plastic matrix with the particulate carrier distributed therein, whereupon thermal curing takes place with the formation of the composite material. In particular, the particulate carrier material may be baked clay and the waste thermosetting powder coatings may be on polyester basis. The application of the composite material produced may be for example flower pots.

The aim of the present invention is to overcome the drawbacks of the cited prior art, by providing a method for manufacturing containers for growing plants, and a container which can be produced with that method, that effectively combine the above described advantageous features of both earthenware vases and plastic vases.

An object of the invention is to provide a method having a small number of simple operations, which can be easily industrialized, and is such as to entail low manufacturing costs, so as to make it economically advantageous to manufacture these vases.

Another object of the present invention is to provide a vase which is also composed of recycled materials, so as to provide a considerable benefit to the environment and reduce manufacturing costs.

This aim, these objects and others which will become better apparent hereinafter are achieved by a method for manufacturing containers for growing plants and by a container which can be produced with such method, according to the accompanying main process and product claims, respectively.

The method for manufacturing containers for growing plants comprises an initial step of reducing plastics and fired clay to granules. The plastics, that is preferably used, is mainly constituted by polyethylene of any density, either virgin or recycled from previous industrial processes. The average size of the granule obtained as a consequence of polyethylene reduction is approximately equal to 500 microns or in any case between 100 and 900 microns in order to ensure its uniform melting. The average size of the granules of fired clay may be any.

The method according to the invention comprises intermediate steps, described hereafter in order of sequence. First of all, there is a step of preparing a mixture formed by the polyethylene granules and the clay granules.

The mixture is prepared dry, by joining the polyethylene to the clay granules according to proportions derived from the characteristics to be obtained in the finished product.

By privileging the amount of clay in the mixture, the porosity of the vase increases, while its elasticity and resistance to impacts decrease. Vice versa, by increasing the amount of polyethylene these last properties are improved to the detriment of porosity and final aesthetic effect. In any case, as an approximation, the percentage of polyethylene in the mixture is between 50 and 70% of total weight. The remaining part is constituted by the clay.

That preparation step is followed by a step of introducing the mixture in adapted molds.

That introduction step is followed by a step of gradually heating the mixture until the melting temperature of the polyethylene is reached.

As an approximation, the temperature is between 150 and 400 °C. Preferably, a temperature between 200 and 300 °C is reached.

The variation of the temperature within such a wide range is due to the fact that the polyethylene is intimately mixed with the clay and therefore does not behave as in the pure state when heated.

The Applicant has in fact found that with 50% polyethylene in the mixture the melting temperature is approximately 250 °C, while with 70% polyethylene the temperature rises to 280 °C.

The heating step is followed by a step in which the mixture is held at the so-called melting temperature for a heating period which is sufficient to allow the melted polyethylene to diffuse in the intergranular spaces and penetrate, albeit to a limited extent, in the clay granules. This penetration is meant mainly to bind the granules to the polyethylene matrix. The penetration is limited, so as to avoid compromising the surface porosity of the granules. The percentage of polyethylene in the mixture influences the heating time as well. The Applicant has found that as the polyethylene percentage increases, the heating time decreases. With 50% polyethylene, the heating time is approximately 20 minutes; with 70% polyethylene it is approximately 15 minutes.

The step of holding the mixture at the melting temperature is followed by a cooling step. The cooling step lasts for a cooling time which is sufficient to fix the reticulation of the polyethylene around the clay granules and to enable the containers thus formed for the next step. Again, the Applicant has found that this cooling time depends on the percentage of polyethylene and substantially decreases as this percentage increases. With 50% polyethylene in the mixture, the cooling time is approximately 20 minutes; with 70% polyethylene it is approximately 15 minutes. Cooling occurs in air without adopting particular procedural refinements. Once the containers have reached ambient temperature, they are released from the corresponding molds that contain them.

The container produced by this method is particular in that it includes granules of fired clay which are uniformly distributed and reticulate formations of plastics, preferably polyethylene, which bind together the clay granules.

As clearly evident, the method and the vase achieve the intended aim and objects.

The method in fact comprises a reduced number of simple operations, so that it can be industrialized easily, with consequent low production costs.

The resulting vase combines in the best way the advantageous features of earthenware vases and plastic vases.

The advantageous properties of the former are in fact given by the uniformly distributed fired clay granules, while the advantageous properties of the latter are given by the plastics that acts as an intergranular binding agent.

The method and the container according to the invention are susceptible of numerous modifications and variations, within the scope of the appended claims.

All the details may be replaced with other technically equivalent elements.

In practice, the materials employed may be any according to requirements.

## Claims

1. A method for manufacturing containers for growing plants, comprising an initial step of reducing plastics and fired clay to granulates and a final step of releasing said containers from molds and, in order of sequence, intermediate steps of;
- preparing a mixture of said granules of said plastics and of said clay;
- introducing said mixture in said molds;
- heating said mixture until the melting temperature of said material is approximately reached;
- holding said mixture at said temperature for a heating time sufficient to allow said melted material to diffuse and penetrate, at least to a limited extend, in said granules of said clay;
- cooling said mixture for a cooling time which is sufficent to fix the reticualtion of said material around said granules of said clay and to enable said containers for said release,
**characterized in that** said preparation of said mixture occurs in dry conditions.

2. The method according to claim 1, **characterized in that** the average size of the plastics granules is between 100 and 900 microns.

3. The method according to one or more of the of the preceding claims, **characterized in that** the percentage by weight of plastics on the total of said mixture is between 50 and 70%.

4. The method according to one or more of the preceding claims, **characterized in that** said heating is gradual.

5. The method according to one or more of the preceding claim, **characterized in that** said melting temperature is between 200 and 300 °C.

6. The method according to one or more of the preceding claims, **characterized in that** said heating time decreases as said weight percentage of said plastics in said mixture increases, **in that** a minimum percentage corresponds to a maximum heating time and vice versa, said heating time being between 15 and 20 minutes.

7. The method according to one or more of the preceding claims. **characterized in that** said cooling time decreases as said weight percentage of said plastics in said mixture increases, **in that** a minimum percentage corresponds to a maximum heating time and vice versa, said cooling time being between 15 and 20 minutes.

8. The method according to one or more of the preceding claims, **characterized in that** said plastics comprises mostly virgin and/or recycled polyethylene of any density.

9. A container produced according to the method, **characterized in that** it comprises uniformly distributed granules of fired clay and reticulate formations of plastics that bind said granules together.

## Patentansprüche

1. Verfahren zur Herstellung von Behältern für heranwachsende Pflanzen, enthaltend einen anfänglichen Schritt einer Zerkleinerung von Kunststoffen und feuerfestem Ton zu Granulaten, einen letzten Schritt des Herausnehmens der Behälter aus Formen und in der Reihenfolge dazwischenliegende Schritte des:
- Bereitstellens einer Mischung von Körnern der Kunststoffe und des feuerfesten Tons;
- Einbringens der Mischung in die Formen;
- Erwärmens der Mischung, bis die Schmelztemperatur des Materials ungefähr erreicht ist;
- Haltens der Mischung bei der Temperatur für eine Erwärmungszeit, die ausreichend ist, um ein Diffundieren und Eindringen des geschmolzenen Materiales in die Körner des feuerfesten Tones zumindest in einem begrenzden Ausmaß zu erlauben;
- Abkühlens der Mischung für eine Abkühlungszeit, die ausreichend ist, um die Vernetzung des Materials um die Körner des feuerfesten Tons zu fixieren und die Behälter in den Stand für das Herausnehmen zu versetzen,
**dadurch gekennzeichnet, daß** die Herstellung der Mischung unter trockenen Bedingungen erfolgt.

2. Verfahren nach Anspruch 1, **dadurch gekennzeichnet, daß** die mittlere Größe der Kunststoff-Körner zwischen 100 und 900 Mikrometern beträgt.

3. Verfahren nach einem oder mehreren der vorangehenden Ansprüche, **dadurch gekennzeichnet, daß** der Gewichtsprozentgehalt der gesamten Mischung an Kunststoff zwischen 50 und 70 % beträgt.

4. Verfahren nach einem oder mehreren der vorangehenden Ansprüche, **dadurch gekennzeichnet, daß** die Erwärmung stufenweise erfolgt.

5. Verfahren nach einem oder mehreren der vorangehenden Ansprüche, **dadurch gekennzeichnet, daß** die Schmelztemperatur zwischen 200 °C und 300 °C liegt.

6. Verfahren nach einem oder mehreren der vorangehenden Ansprüche, **dadurch gekennzeichnet, daß** die Erwärmungszeit mit einem Anstieg des Gewichtsprozentgehaltes an Kunststoff in der Mischung abnimmt und ein minimaler Prozentgehalt einer maximalen Erwärmungszeit und umgekehrt entspricht, wobei die Erwärmungszeit zwischen 15 und 20 Minuten beträgt.

7. Verfahren nach einem oder mehreren der vorangehenden Ansprüche, **dadurch gekennzeichnet, daß** die Abkühlungszeit mit einem Anstieg des Gewichtsprozentgehaltes an Kunststoff in der Mischung abnimmt und ein minimaler Prozentgehalt einer maximalen Abkühlungszeit entspricht und umgekehrt, wobei die Abkühlungszeit zwischen 15 und 20 Minuten beträgt.

8. Verfahren nach einem oder mehreren der vorangehenden Ansprüche, **dadurch gekennzeichnet, daß** der Kunststoff hauptsächlich unbehandeltes und/oder wiederverwertetes Polyethylen irgendeiner Dichte enthält.

9. Ein nach dem Verfahren hergestellter Behälter, **dadurch gekennzeichnet, daß** er gleichmäßig verteilte Körner aus feuerfestem Ton und vernetzte Gebilde aus Kunststoff enthält, die die Körner zusammenbinden.

## Revendications

1. Procédé de fabrication de conteneurs pour cultiver des plantes, comprenant une étape initiale de réduction en granulés de matières plastiques et d'argile cuite, et une étape finale de démoulage desdits conteneurs des moules, et, dans l'ordre chronologique, les étapes intermédiaires suivantes:
- préparer un mélange desdits granulés desdites matières plastiques et de ladite argile;
- introduire ledit mélange dans lesdits moules;
- chauffer ledit mélange jusqu'à ce que la température de fusion desdites matières soit à peu près atteinte;
- maintenir ledit mélange à ladite température pendant un temps de chauffage suffisant pour permettre aux matières en fusion de diffuser et de pénétrer, au moins d'une manière limitée, dans lesdits granulés de ladite argile;
- refroidir ledit mélange pendant un temps de refroidissement qui est suffisant pour fixer la réticulation de ladite matière autour desdits granulés de ladite argile et pour permettre auxdits conteneurs de subir ledit démoulage;
**caractérisé en ce que** ladite préparation dudit mélange se fait dans des conditions à sec.

2. Procédé selon la revendication 1, **caractérisé en ce que** la taille moyenne des granulés de matière plastique se situe entre 100 et 900 microns.

3. Procédé selon l'une ou plusieurs des revendications précédentes, **caractérisé en ce que** le pourcentage du poids de la matière plastique par rapport au total dudit mélange est de 50 à 70%.

4. Procédé selon l'une quelconque des revendications précédentes, **caractérisé en ce que** ledit chauffage s'effectue progressivement.

5. Procédé selon l'une quelconque des revendications précédentes, **caractérisé en ce que** ladite température de fusion se situe entre 200 et 300°C.

6. Procédé selon l'une quelconque des revendications précédentes, **caractérisé en ce que** le temps de chauffage diminue en rapport avec une augmentation du pourcentage en poids de ladite matière plastique dans ledit mélange, **en ce qu'**un pourcentage minimal correspond à un temps de chauffage maximal, et vice versa, ledit temps de chauffage étant compris entre 15 et 20 minutes.

7. Procédé selon l'une quelconque des revendications précédentes, **caractérisé en ce que** ledit temps de refroidissement diminue en rapport avec une augmentation dudit pourcentage en poids de ladite matière plastique dans ledit mélange, **en ce qu'**un pourcentage minimal correspond à un temps de refroidissement maximal, et vice versa, ledit temps de refroidissement étant compris entre 15 et 20 minutes.

8. Procédé selon l'une quelconque des revendications précédentes, **caractérisé en ce que** ladite matière plastique comprend pour l'essentiel du polyéthylène vierge et/ou recyclé de n'importe quelle densité.

9. Conteneur produit suivant le procédé, **caractérisé en ce qu'**il comprend, en répartition uniforme, des granulés d'argile cuite, et des formations réticulées de matière plastique qui lient lesdits granulés.
